# EUROPÄISCHE PATENTSCHRIFT

(11) **EP 2 926 701 B1**
(45) Veröffentlichungstag und Bekanntmachung des Hinweises auf die Patenterteilung: **23.08.2017**
(21) Anmeldenummer: 15000951.2
(22) Anmeldetag: 01.04.2015
(51) Int. Cl.: A47J 37/06

(54) **PLATTENFÖRMIGER GRILL MIT VOLLFLÄCHIGER KOCHZONE**
PLATE-SHAPED GRILL WITH FULL-SURFACE COOKING ZONE
GRIL EN FORME DE PLAQUE AYANT UNE ZONE DE CUISSON ENTIÈREMENT PLATE

(30) Priorität: 03.04.2014 DE 202014002850 U
(43) Veröffentlichungstag der Anmeldung: 07.10.2015
(73) Patentinhaber: Bruckbauer, Wilhelm, 83115 Neubeuern (DE)
(72) Erfinder: Bruckbauer, Wilhelm, 83115 Neubeuern (DE); Blersch, Mario, 83098 Brannenburg (DE); Könneker, Walter, 83022 Rosenheim (DE)
(74) Vertreter: Ganter, Paul

(56) Entgegenhaltungen:
- DE-U1- 9 420 656

## Beschreibung

Die vorliegende Erfindung betrifft einen plattenförmigen Grill (1), insbesondere einen Tepan-Edelstahl-Grill, mit den in dem Oberbegriff des Patentanspruches 1 angegebenen Merkmalen.

Aus dem Stand der Technik ist es bekannt, einen plattenförmigen Grill mit einem oder mit mehreren, im wesentlichen punktuell wirkenden Induktions- oder Masse-Heizkörpern zu versehen. In den Zwischenräumen zwischen diesen Heizkörpern treten - insbesondere in der Heizphase - zeitliche Verzögerungen, örtliche Temperaturspreizungen und örtliche Ungleichmäßigkeiten in Bezug auf die Temperaturen an verschiedenen Orten der gesamten Grillplattenfläche auf. Denn die randwärts von diesen Heizkörpern gelegenen, außerhalb der Heizkörper-Zonen befindlichen Bereiche benötigen dort eine störend lange Zeit, bis auch sie die von den Heizkörpern ausgehende Wärme - mittels Wärmeleitung - übernehmen.

Diese örtliche Ungleichmäßigkeit der Erwärmung der bekannten Grillplatte während deren Heizphase führt insbesondere zu dem Nachteil, dass großflächiges Grillgut an verschiedenen Stellen unterschiedlichen Temperaturen ausgesetzt ist, wodurch das besonders wichtige Ergebnis eines im Hinblick auf die Grillbedingungen homogenen Grillens - mit all seinen geschmacklichen Vorteilen - verhindert wird. Aus der DE 94 20 656 U1 ist eine Vorrichtung zum Grillen von Speisen bekannt.

Aufgabe der vorliegenden Erfindung ist daher die Bereitstellung eines plattenförmigen Grills (1), welcher eine Aufheizung der Grillplatte (2) in vollflächiger, örtlich gleichmäßiger und örtlich gleichzeitiger Art und Weise ohne örtliche Temperaturspreizungen gestattet.

Erfindungsgemäß wird diese Aufgabe bei einem gattungsgemäßen plattenförmigen Grill (1) durch die in dem Patentanspruch 1 angegebenen Merkmale gelöst.

Besonders bevorzugte Ausführungsformen sind Gegenstand der Unteransprüche.

Ausführungsbeispiele der Erfindung werden anhand der Zeichnungen näher beschrieben. Es zeigen:

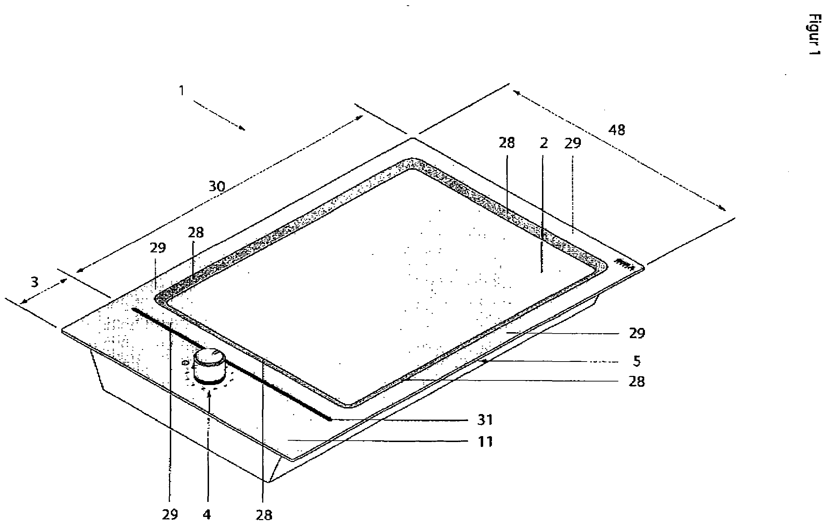

Figur 1 eine schematische, perspektivische Ansicht von schräg rechts oben auf einen erfindungsgemäßen plattenförmigen Grill (1), welcher ein Feld (30) zur Aufnahme der Grillplatte (2) und ein Bedienfeld (3) zur Aufnahme eines Bedienknebels (4) oder einer kapazitiven Einrichtung (32) zur Steuerung und/oder Regelung eines Flächenheizelementes (5) der Grillplatte (2) trägt, wobei ein Langloch (31) zwischen dem Feld (30) und dem Bedienfeld (3) vorgesehen ist und die Felder (30 und 3) einstückig ausgebildet sind;

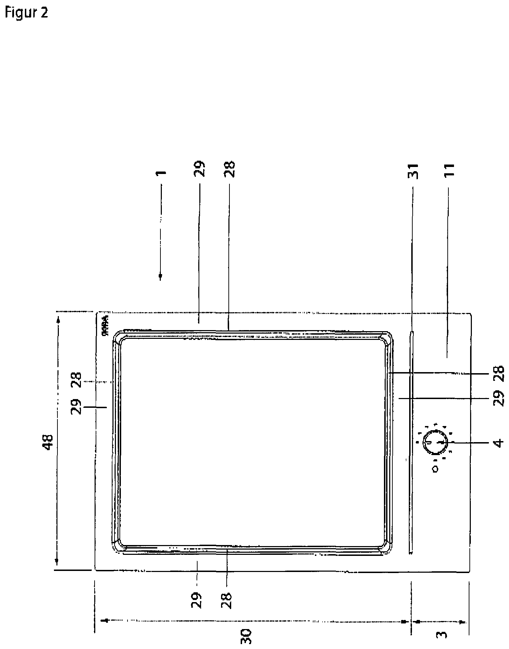

Figur 2 eine schematische Draufsicht auf einen erfindungsgemäßen plattenförmigen Grill (1) gemäß Figur 1;

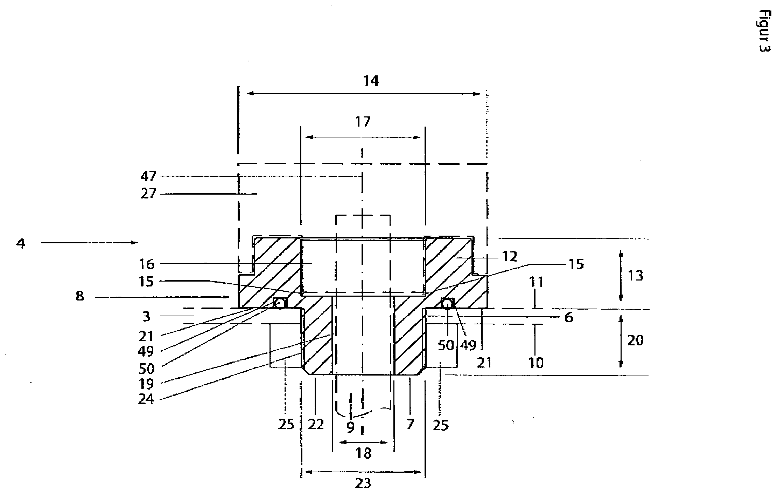

Figur 3 einen schematischen Querschnitt durch eine erfindungsgemäße Bedieneinrichtung (4), welcher ein sockelförmiges Führungs- und Dichtungselement (8), das flüssigkeitsdicht und in rotativer Hinsicht feststehend mit dem Bedienfeld (3) in Verbindung steht und über die Oberseite (11) des Bedienfeldes (3) in einem Maße (13) ragt und einen drehbaren, zu Reinigungszwecken abnehmbaren Bedienknebel (27) umfasst, welcher einen zentralen Zapfen (16) zum spielfreien Eingriff in eine zentrale Aussparung (15) des Vorsprunges (12) des Führungs- und Dichtungselementes (8) aufweist;

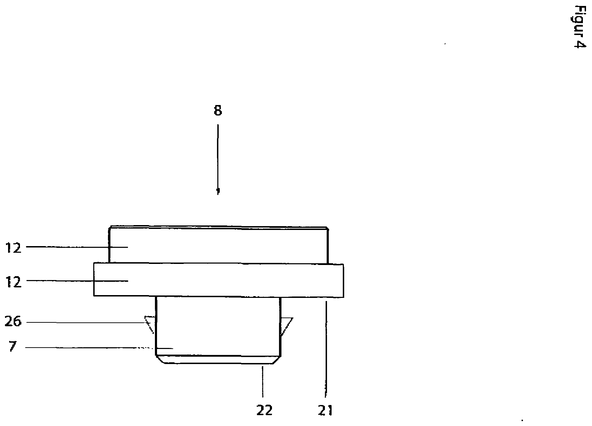

Figur 4 einen schematischen Querschnitt durch ein erfindungsgemäßes Führungs- und Dichtungselement (8) der Bedieneinrichtung (4), bei welchem die seitlich umlaufende Wand stufenförmig ausgebildet ist, wobei in diese Wand-Stufe der hutförmig ausgebildete und nach unten weisende Rand des drehbaren Bedienknebels (27) eine Bedieneinrichtung (4) eingreift und wobei der Außenumfang des Zapfens (7) des Führungs- und Dichtungselementes (8) eine Rastvorrichtung (26) für die kraftschlüssige und/oder formschlüssige Anbringung des Führungs- und Dichtungselementes (8) an dem Bedienfeld (3) aufweist;

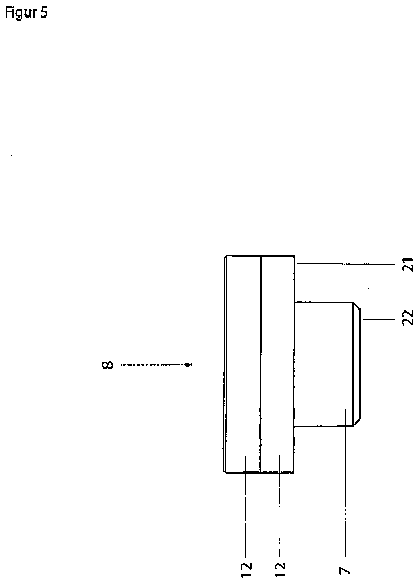

Figur 5 einen schematischen Querschnitt durch ein erfindungsgemäßes Führungs- und Dichtungselement (8) der Bedieneinrichtung (4), bei welchem die seitlich umlaufende Wand glatt und stufenlos ausgebildet ist, wobei der drehbare Bedienknebel (27) der Bedieneinrichtung (4) scheibenförmig auf diesem Führungs- und Dichtungselement (8) drehbar aufliegt;

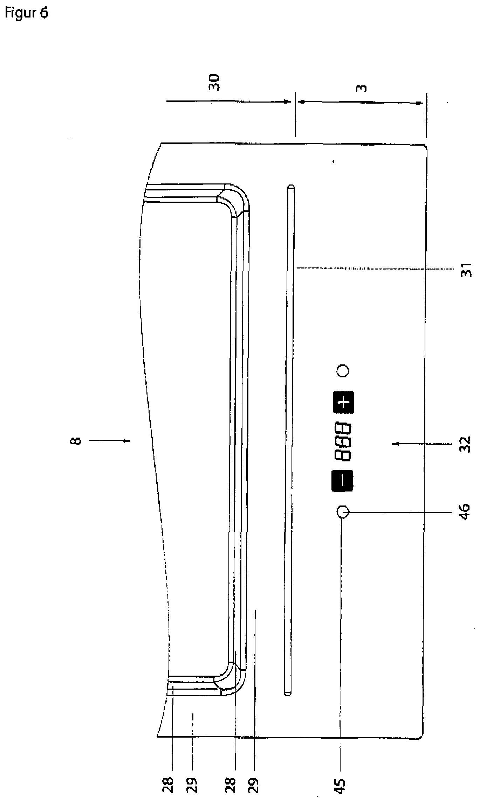

Figur 6 eine schematische Draufsicht auf das Bedienfeld (3) und den hierzu benachbarten Abschnitt des Feldes (30) zur Aufnahme der Grillplatte (2), wobei das Bedienfeld (3) eine kapazitive Einrichtung (32) zur Steuerung und/oder Regelung des Flächenheizelementes (5) der Grillplatte (2) und seitlich hiervon zwei Beleuchtungseinrichtungen (46) trägt;

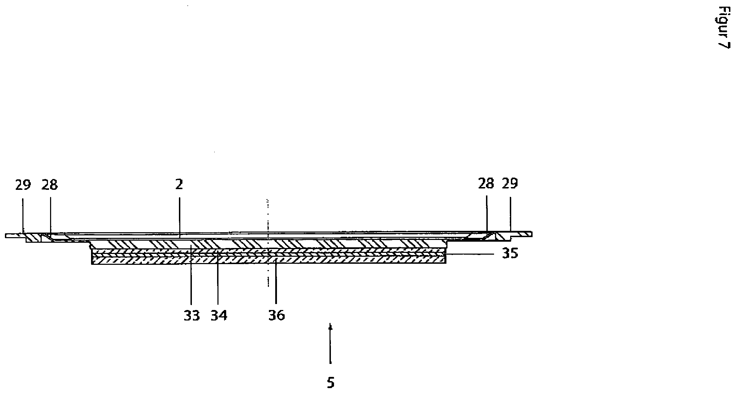

Figur 7 einen schematischen Querschnitt durch eine erfindungsgemäße, tieferliegende Grillplatte (2), welche zwischen gegenüberliegenden, höherliegenden Rändern (29) des Feldes (30) zur Aufnahme der Grillplatte (2) - unter Ausbildung von Randprofilen (28) - eingefasst ist, wobei diese Randprofile (28) jeweils einem schräg stehenden, gestreckten Buchstaben "S" entsprechen und glatt und schmutzfugenfrei ausgebildet sind, wobei an der Unterseite der Grillplatte (2) vollflächig ein Flächenheizelement (5) der Grillplatte (2) vorgesehen ist, welches eine oben liegende Aluminiumplatte (34), eine unten liegende Aluminiumplatte (36) und ein dazwischen liegendes Flächenheizelement (35) umfasst, wobei sich das Flächenheizelement (35) vollflächig über die aktive Gesamtfläche der Grillplatte (2) und diese gleichmäßig, gleichzeitig und verzögerungsfrei beheizend, erstreckt;

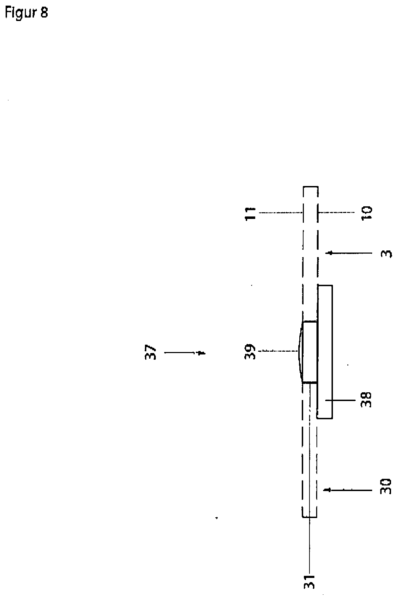

Figur 8 einen schematischen Querschnitt durch den Übergangsbereich zwischen dem Bedienfeld (3) und dem Feld (30), wobei dort in das Langloch (31) von der Unterseite (10) des Bedienfeldes (3) her ein undurchsichtiger oder transparenter, beleuchtbarer Wärme-Isolations-Einsatz (37) - oder eine Zierleiste - eingesetzt sind;

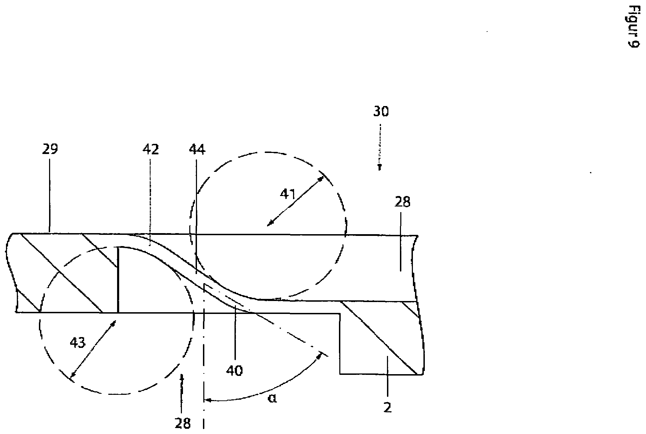

Figur 9 einen schematischen Querschnitt durch ein Randprofil (28) der Grillplatte (2), welches glatt und schmutzfugenfrei in Form eines schräg stehenden gestreckten Buchstabens "S" ausgebildet ist und eine höherliegende, dem Rand (29) des Feldes (3) zur Aufnahme der Grillplatte (2) nahe gelegene Krümmung (42) und eine hierzu tieferliegende, grillplattennahe Krümmung (40) aufweist, wobei zwischen diesen beiden Krümmungen (42, 40) ein gerades Verbindungselement (44) vorgesehen ist, welches mit einer durch die Mitte des geraden Verbindungselementes (44) gedachten vertikalen Linie einen Winkel α einschließt.

Bei dem erfindungsgemäßen plattenförmigen Grill (1) kann die gesamte Unterseite der Grillplatte (2) vollflächig mit einem oder mit mehreren Flächenheizelementen (5) in mittelbarer oder unmittelbarer Verbindung stehen.

Diese vollflächige Beheizbarkeit der Grillplatte (2) mittels eines oder mehrerer Flächenheizelemente (5) führt in der Regel zu dem Vorteil, dass die Grillplatte (2) in Bezug auf ihre gesamte Fläche absolut gleichmäßig, gleichzeitig und ohne sich über die Breite (48) des Grills (1) erstreckende Temperatur beheizbar ist. Nur in diesem Falle sind optimale Grillresultate erreichbar.

Wie insbesondere aus Figur 7 hervorgeht, kann im Falle des erfindungsgemäßen plattenförmigen Grills (1) das Flächenheizelement (5) zur vollflächigen, gleichmäßigen, gleichzeitigen und von Temperaturspreizungen freien Beheizung der Grillplatte (2) beispielsweise in Form eines Flächenheizelements (5) ausgebildet sein, bei welchem ein Widerstandsdraht in eine Schicht (35) aus mit Kunstharzen verpressten Glimmerbruchstücken engmaschig eingebettet ist.

In besonders bevorzugten Ausführungsformen des erfindungsgemäßen plattenförmigen Grills (1) kann diese Flächenheizungs-Schicht (35) sandwichartig zwischen einer obenliegenden Aluminium-Platte (34) und einer untenliegenden Aluminium-Platte (36) vorgesehen sein.

In der Regel kann ein solches sandwichartig aufgebautes Flächenheizelement (5) mittelbar oder unmittelbar mit der Rückseite der Grillplatte (2) - und diese vollflächig, gleichmäßig, gleichzeitig und frei von Temperaturspreizungen beheizend - in Verbindung stehen.

Wie bereits aus Figur 1 ersichtlich, kann bei dem erfindungsgemäßen plattenförmigen Grill (1) das Feld (30) zur Aufnahme der Grillplatte (2) einstückig mit einem Bedienfeld (3) ausgebildet sein.

In besonders bevorzugten Ausführungsformen des erfindungsgemäßen plattenförmigen Grills (1) können sowohl das Feld (30) zur Aufnahme der Grillplatte (2) als auch das Bedienfeld (3) aus Metall sowie einstückig oder mehrteilig gefertigt sein.

Vorzugsweise kann das Bedienfeld (3) entweder eine oder mehrere kapazitive Eingabeeinrichtungen (32) für die Steuerung und Regelung des Flächenheizelementes (5) oder - zusätzlich hierzu oder stattdessen - eine oder mehrere Bedieneinrichtungen (4) mit jeweils einem drehbaren Bedienknebel (27) tragen.

Wie insbesondere die Figuren 1, 2, 6 und 8 zeigen, können zwischen dem Feld (30) zur Aufnahme der Grillplatte (2) einerseits und dem Bedienfeld (3) zur Aufnahme der einen oder der mehreren kapazitiven Eingabeeinrichtungen (32) oder Bedieneinrichtungen (4) andererseits ein oder mehrere hintereinander ausgebildete, jeweils ein- oder mehrteilige, Langlöcher (31) in der das Feld (30) und das Bedienfeld (3) bildenden Metall-Platte vorgesehen sein.

Im Allgemeinen können die Längsachsen des oder der Langlöcher (31) beispielsweise parallel zu demjenigen Rand (29) des Feldes (30) zur Aufnahme der Grillplatte (2) ausgerichtet sein, der in Richtung des Bedienfeldes (3) weist.

In besonders bevorzugten Ausführungsformen des erfindungsgemäßen Grills (1) können sich die Langlöcher (31) mit einer Länge in dem Bereich von 5,0 % bis 95,0 %, vorzugsweise in dem Bereich von 10,0 % bis 90, 0 %, insbesondere in dem Bereich von 15,0 % bis 85,0 %, zentriert über die Breite (46) des Grills (1) durchgehend oder abschnittsweise - zumindest vor der oder vor den kapazitiven Eingabeeinrichtungen oder Bedieneinrichtungen (4) - erstrecken.

In der Regel kann das mindestens eine Langloch (31) eine Breite aufweisen, die in dem Bereich von 1,5 mm bis 25,0 mm, vorzugsweise in dem Bereich von 1,7 mm bis 21,0 mm, insbesondere in dem Bereich von 2,0 mm bis 20, 0 mm liegt.

Insbesondere die Figur 8 zeigt, dass in dem mindestens einen ein- oder mehrteiligen Langloch (31) mindestens ein ein- oder mehrteiliger Wärme-Isolations-Einsatz (37) oder eine Zierleiste vorgesehen sein kann.

Dieser Wärme-Isolations-Einsatz (37) oder die Zierleiste kann in besonders bevorzugten Ausführungsformen des erfindungsgemäßen Grills (1) die Vorderseite (11) des Bedienfeldes (3) in dem Bereich von 0,1 mm bis 20,0 mm, vorzugsweise in dem Bereich von 0,2 mm bis 18,0 mm, insbesondere in dem Bereich von 0,3 mm bis 15,0 mm, in Form eines Überstandes (39) nach oben überragen.

Ebenfalls insbesondere aus Figur 8 geht hervor, dass der Zapfen (38) des mindestens einen Wärme-Isolations-Einsatzes (37) - oder der an dessen Stelle zum Einsatz kommenden Zierleiste - mit der Unterseite (10) des Bedienfeldes (3) in Verbindung stehen kann.

In der Regel können der mindestens eine Wärme-Isolations-Einsatz (37) - oder die an dessen Stelle zum Einsatz kommende Zierleiste - aus undurchsichtigem Material gefertigt sein, beispielsweise aus Kunststoff oder Keramik.

Alternativ hierzu können der mindestens eine Wärme-Isolations-Einsatz (37) - oder die an dessen Stelle zum Einsatz kommende Zierleiste - transparent ausgebildet sein und gegebenenfalls mittels einer oder mehrerer ein- oder mehrteiliger Beleuchtungen weißes oder farbiges Licht abgebend, ausgestaltet sein.

Insbesondere die Figuren 3, 4 und 5 zeigen, das im Falle des erfindungsgemäßen plattenförmigen Grills (1) jede Bedieneinrichtung (4) ein flüssigkeitsdicht und in rotativer Hinsicht fest und starr mit dem Bedienfeld (3) in Verbindung stehendes, sockelförmiges Dichtungs- und Führungselement (8) umfassen kann.

In besonders bevorzugten Ausführungsformen kann auf diesem sockelförmigen Dichtungs- und Führungselement (8) ein um eine senkrecht zur Oberseite (11) des Bedienfeldes (3) ausgerichtete Drehachse (47) reversibel hin- und herdrehbarer Bedienknebel (27) der Bedieneinrichtung (4) reversibel abnehmbar vorgesehen sein.

Dieser drehbare Bedienknebel (27) der Bedieneinrichtung (4) kann mit einer parallel zu der Drehachse (47) ausgerichteten Achse (9) der Bedieneinrichtung (4) reversibel in Verbindung stehen.

Vorzugsweise kann sowohl die Achse (9) der Bedieneinrichtung (4) als auch der Bedienknebel (27) der Bedieneinrichtung (4) von dem sockelförmigen, in rotativer Hinsicht feststehenden Dichtungs- und Führungselement (8) spielfrei gehalten und während der Drehung des Bedienknebels (27) der Bedieneinrichtung (4) spielfrei geführt sein.

Wie insbesondere aus Figur 3 hervorgeht, kann das Bedienfeld (3) - in Abhängigkeit von der gewünschten Anzahl von Bedieneinrichtungen (4) - eine oder mehrere runde Aussparungen (6) aufweisen, durch welche jeweils der Zapfen (7) eines Führungs- und Dichtungselementes (8) - in Richtung der Unterseite (10) des Bedienfeldes (3) - hindurchführbar ist.

Gegenüberliegend zu dem Zapfen (7) kann das Führungs- und Dichtungselement (8) in Richtung der Oberseite (11) des Bedienfeldes (3) einen Vorsprung (12) aufweisen.

Im Allgemeinen kann dieser Vorsprung (12) des Führung- und Dichtungselementes (8) die Oberseite (11) des Bedienfeldes (3) nach oben überragen.

Wie aus Figur 3 zusätzlich ersichtlich, kann der nach oben aufragende Vorsprung (12) des in rotativer Hinsicht feststehenden Führungs- und Dichtungselements (8) eine zentrale Aussparung (15) zur spielfreien Aufnahme und zur spielfreien Führung eines nach unten weisenden, zentralen Zapfens (16) des drehbaren Bedienknebels (27) der Bedieneinrichtung (4) - und/oder zur Hindurchführung der Achse (9) der Bedieneinrichtung (4) - aufweisen.

Insbesondere Figur 3 zeigt, dass auch der nach unten gerichtete Zapfen (7) des in rotativer Hinsicht feststehenden Führungs- und Dichtungselements (8) eine zentrale Aussparung (19) zur spielfreien Führung der Achse (9) der Bedieneinrichtung (4) besitzen kann.

Vorzugsweise kann der Übergang zwischen diesen beiden zentralen Aussparungen (15; 19) glatt oder stufig ausgebildet sein.

In besonders bevorzugten Ausführungsformen des erfindungsgemäßen plattenförmigen Grills (1) kann der Außenumfang des nach unten gerichteten Zapfens (7) des in rotativer Hinsicht feststehenden Führungs- und Dichtungselementes (8) entweder ein Gewinde (24) zum Eingriff einer Mutter (25) oder eine oder mehrere Rasteinrichtungen (26) - zum formschlüssigen und/oder kraftschlüssigen Anbringen des in rotativer Hinsicht feststehenden Dichtungs- und Führungselementes (8) in dem Bereich um die runde Aussparung (6) des Bedienfeldes (3) - tragen.

In der Regel kann das sockelartige, in rotativer Hinsicht feststehende Dichtungs- und Führungselement (8) - gegen ein Drehen um die Drehachse (47) gesichert- flüssigkeitsdicht mit dem Bedienfeld (3) in Verbindung stehen.

Im Allgemeinen kann der drehbare Bedienknebel (27) der Bedieneinrichtung (4) hutförmig oder scheibenförmig - um die Drehachse (47) drehbar - reversibel auf dem in rotativer Hinsicht feststehenden Dichtungs- und Führungselement (8) aufsitzen oder aufliegen oder mit diesem in Verbindung stehen.

Vorzugsweise können der drehbare Bedienknebel (27) der Bedieneinrichtung (4) und das feststehende, sockelförmige Führungs- und Dichtungselement (8) jeweils - abhängig oder unabhängig voneinander- undurchsichtig ausgestaltet und beispielsweise aus Kunststoff, Keramik oder Metall ausgebildet sein.

Alternativ hierzu können der drehbare Bedienknebel (27) der Bedieneinrichtung (4) und das feststehende, sockelförmige Führungs- und Dichtungselement (8) jeweils - abhängig oder unabhängig voneinander- transparent ausgestaltet sein und gegebenenfalls mittels einer oder mehrerer ein- oder mehrteiliger Beleuchtungen weißes oder farbiges Licht abgebend ausgebildet sein.

In besonders kostengünstig herzustellenden Ausführungsalternativen kann die Unterseite (21) des Vorsprunges (12) des sockelförmigen, in rotativer Hinsicht feststehenden Dichtungs- und Führungselements (8) glatt ausgebildet sein.

Alternativ zu einer glatten Ausgestaltung der Unterseite (21) des Vorsprungs (12) kann diese Unterseite (21) des Vorsprungs (12) eine ringförmig umlaufende Nut (49) für die Aufnahme eines gegenüber dem Bedienfeld (3) abdichtenden, elastischen O-Ringes (50) aufweisen (siehe insbesondere Figur 3).

Wie insbesondere aus Figur 5 hervorgeht, kann die seitlich umlaufende Außenwand des sockelförmigen, in rotativer Hinsicht feststehenden Führungs- und Dichtungselements (8) glatt und gerade ausgebildet sein.

Alternativ hierzu kann die seitlich umlaufende Außenwand des sockelförmigen, in rotativer Hinsicht feststehenden Führungs- und Dichtungselements (8) - für den Eingriff der hutrandartig nach unten ausgerichteten, umlaufenden Wand des drehbaren Bedienknebels (27) der Bedieneinrichtung (4) - stufenförmig ausgebildet sein (siehe insbesondere Figuren 3 und 4).

Figur 3 zeigt, dass im Falle des erfindungsgemäßen plattenförmigen Grills (1) der Vorsprung (12) des in rotativer Hinsicht feststehenden, sockelförmigen Führungs- und Dichtungselementes (8) die Oberseite (11) des Bedienfeldes (3) in einem Ausmaß (13) überragen kann, das in einem Bereich von 3,0 mm bis 40,0 mm, vorzugsweise in dem Bereich von 4,0 mm bis 30,0 mm, insbesondere in dem Bereich von 5,0 mm bis 25,0 mm, liegt.

Der nach oben weisende Vorsprung (12) des in rotativer Hinsicht festsehenden Führungs- und Dichtungselementes (8) kann beispielsweise eine Breite (14) in dem Bereich von 20,0 mm bis 60,0 mm, vorzugsweise in dem Bereich von 25,0 mm bis 55,0 mm, insbesondere in dem Bereich von 27,0 mm bis 50,0 mm, aufweisen.

Die Breite (17) der zentralen Aussparung (15) des nach oben gerichteten Vorsprungs (12) des in rotativer Hinsicht feststehenden Führungs- und Dichtungselementes (8) kann beispielsweise in dem Bereich von 5,0 mm bis 40,0 mm, vorzugsweise in dem Bereich von 10,0 mm bis 30,0 mm, insbesondere in dem Bereich von 12,0 mm bis 25,0 mm, liegen.

Die Breite (18) der zentralen Aussparung (19) des nach unten gerichteten Zapfens (7) des in rotativer Hinsicht feststehenden Dichtungs- und Führungselementes (8) kann beispielsweise an den Durchmesser der Achse (9) der Bedieneinrichtung (4) spielfrei angepasst sein und beispielsweise in dem Bereich von 5,0 mm bis 30,0 mm, vorzugsweise in dem Bereich von 6,0 mm bis 25,0 mm, insbesondere in dem Bereich von 7,0 mm bis 20,0 mm, liegen.

Der Abstand (20) zwischen der Unterseite (21) des nach oben weisenden Vorsprungs (12) des in rotativer Hinsicht feststehenden Dichtungs- und Führungselementes (8) einerseits und der Unterseite (22) des nach unten weisenden Zapfens (7) des in rotativer Hinsicht feststehenden Dichtungs- und Führungselements (8) andererseits, kann beispielsweise in dem Bereich von 3,0 mm bis 30,0 mm, vorzugsweise in dem Bereich von 4,0 mm bis 25,0 mm, insbesondere in dem Bereich von 5,0 mm bis 20,0 mm, liegen.

Die Breite (23) des nach unten weisenden Zapfens (7) des in rotativer Hinsicht feststehenden Dichtungs- und Führungselementes (8) kann beispielsweise in dem Bereich von 7,0 mm bis 32,0 mm, vorzugsweise in dem Bereich von 8,0 mm bis 27.0 mm, insbesondere in dem Bereich von 9,0 mm bis 22,0 mm, liegen.

Aus den Figuren 7 und 9 geht hervor, dass im Falle des erfindungsgemäßen plattenförmigen Grills (1) das Randprofil (28) der vollflächig, gleichmäßig, gleichzeitig und ohne Temperaturspreizung beheizten Grillplatte (2) - zwischen dem obenliegenden Rand (29) des Feldes (30) zur Aufnahme der Grillplatte (2) einerseits und der gegenüber dem obenliegenden Rand (29) abgesenkten Grillplatte (2) andererseits - in der Form eines schrägstehenden, gestreckten, glatten und knickfreien Buchstabens "S" ausgebildet sein kann.

Die wannenartige Absenkung der tieferliegenden Grillplatte (2) gegenüber dem höherliegenden Rand (29) des Feldes (30) ist insbesondere dadurch herbeiführbar, dass der Rand (29) des Feldes (30) und die Grillplatte (2) einstückig ausgebildet sind und die Grillplatte (2) in einem Tiefziehverfahren gegenüber dem Rand (29) des Feldes (30) abgesenkt wird.

Figur 9 zeigt, dass der Radius (43) derjenigen Krümmung (42), die dem Rand (29) des Feldes (30) zur Aufnahme der Grillplatte (2) nahe gelegen ist und der Radius (41) der grillplattennahen Krümmung (40), beispielsweise jeweils in dem Bereich von 2,0 mm bis 20,0 mm, vorzugsweise in dem Bereich von 3,0 mm bis 15,0 mm, insbesondere in dem Bereich von 4,0 mm bis 10,0 mm liegen können.

In der Regel können diese beiden Radien (43; 41) gleich sein. Alternativ hierzu können diese beiden Radien (41; 43) voneinander verschieden sein.

Insbesondere aus den Figuren 7 und 9 geht hervor, dass zwischen der obenliegenden Krümmung (42) und der hierzu tieferliegenden Krümmung (40) ein gerade und glatt ausgebildetes Verbindungselement (44) vorgesehen sein kann.

In der Regel kann dieses gerade und glatt ausgebildete Verbindungselement (44) mit einer durch die Mitte des geraden und glatten Verbindungselementes (44) gedachten vertikalen Linie einen Winkel α einschließen, der in dem Bereich von beispielsweise 88° bis 1°, vorzugsweise in dem Bereich von 85° bis 5°, insbesondere in dem Bereich von 80° bis 10°, liegt.

Im Falle des erfindungsgemäßen plattenförmigen Grills (1) kann es sich bei der - anstelle von oder zusätzlich zu der Bedieneinrichtung (4) mit drehbarem Bedienknebel (27) - gegebenenfalls vorhandenen kapazitiven Einrichtung zur Steuerung und/oder Regelung des Flächenheizelementes (5) um einen benutzerbetätigten, kapazitiven Touchscreen des Typs "Projected Capacitive Touch" handeln.

Bei einem solchen Touchscreen können - als Touch-Sensoren - zwei voneinander isolierte, leitfähige Ebenen übereinander liegen.

Diese beiden voneinander isolierten, leitfähigen Ebenen können beispielsweise mit einem herstellerspezifischen Muster, vorzugsweise in Form von Kondensatoren, bedruckt sein.

In der Regel können diese derartig ausgestalteten Touch-Sensoren auf der Unterseite (10) des Bedienfeldes (3) vorgesehen sein.

Bei Annäherung oder Berührung der Touch-Oberfläche auf der Oberseite (11) des Bedienfeldes (3) mit einem Finger des Benutzers kann den Kondensatoren elektrische Ladung entzogen werden, wobei dann kapazitive Felder durch das Bedienfeld (3) hindurch projiziert werden. Eine Elektronik kann diese Änderung als Berührung erkennen.

Zusammenfassend ist festzustellen, dass im Rahmen der vorliegenden Erfindung ein plattenförmiger Grill (1) bereitgestellt wird, welcher eine Aufheizung der Grillplatte (2) in vollflächiger, örtlich gleichmäßiger und örtlich gleichzeitiger Art und Weise ohne örtliche Temperaturspreizungen gestattet.

Durch das Vorsehen eines oder mehrerer Flächenheizelemente (5) mittelbar oder unmittelbar an der Unterseite der Grillplatte (2) gelingt es erstmals, die gesamte Fläche der Grillplatte (2) nicht mehr nur - wie bisher, im Falle von bekannten Induktions- oder Masse-Heizkörpern - im wesentlichen punktuell zu beheizen.

Vielmehr kann im Falle des erfindungsgemäßen plattenförmigen Grills (1) die Grillplatte (2) nunmehr - unter Ausschluss von zeitlichen Verzögerungen und örtlichen Temperaturspreizungen insbesondere während der Heizphase - vollflächig, örtlich gleichmäßig, örtlich gleichzeitig, verzögerungsfrei und ohne jegliche örtliche Temperaturspreizung beheizt werden.

Diese ausgeprägte örtliche Gleichmäßigkeit der vollflächigen Erwärmung der Grillplatte während deren Heizphase führt insbesondere zu dem Vorteil, dass großflächiges Grillgut an allen Stellen gleichen Temperaturen und Grillbedingungen ausgesetzt ist, wodurch das besonders wichtige Ergebnis eines im Hinblick auf die Grillbedingungen homogenen Grillens - mit all seinen geschmacklichen Vorteilen - ermöglicht wird.

## Patentansprüche

1. Plattenförmiger Grill (1) wobei die gesamte Unterseite der Grillplatte (2) vollflächig mit einem oder mit mehreren Flächenheizelementen (5) in mittelbarer oder unmittelbarer Verbindung steht, so dass die Grillplatte (2) in Bezug auf ihre gesamte Fläche absolut gleichmäßig und gleichzeitig beheizbar ist, **dadurch gekennzeichnet, dass** es sich bei dem Flächenheizelement (5) zur vollflächigen, gleichmäßigen und gleichzeitigen Beheizung der Grillplatte (2) um ein Flächenheizelement (5) handelt, bei welchem ein Widerstandsdraht in eine Schicht (35) aus mit Kunstharzen verpressten Glimmerbruchstücken engmaschig eingebettet ist, wobei diese Schicht (35) sandwichartig zwischen einer obenliegenden Aluminium-Platte (34) und einer untenliegenden Aluminium-Platte (36) vorgesehen ist und wobei dieses sandwichartige Flächenheizelement (5) mittelbar oder unmittelbar mit der Rückseite der Grillplatte (2) - und diese vollflächig, gleichmäßig und gleichzeitig beheizend - in Verbindung steht.

2. Plattenförmiger Grill (1) nach Anspruch 1, **dadurch gekennzeichnet, dass** sein Feld (30) zur Aufnahme der Grillplatte (2) einstückig mit einem Bedienfeld (3) ausgebildet ist, wobei sowohl das Feld (30) zur Aufnahme der Grillplatte (2) als auch das Bedienfeld (3) aus Metall gefertigt sind und wobei das Bedienfeld (3) entweder eine oder mehrere kapazitive Eingabeeinrichtungen (32) für die Steuerung und Regelung des Flächenheizelementes (5) oder statt dessen eine oder mehrere Bedieneinrichtungen (4) trägt.

3. Plattenförmiger Grill (1) nach einem der vorhergehenden Ansprüche, **dadurch gekennzeichnet, dass** zwischen dem Feld (30) zur Aufnahme der Grillplatte (2) einerseits und dem Bedienfeld (3) zur Aufnahme der einen oder der mehreren kapazitiven Eingabeeinrichtungen (32) oder Bedieneinrichtungen (4) andererseits ein oder mehrere hintereinander ausgebildete, jeweils ein- oder mehrteilige, Langlöcher (31) in der das Feld (30) und das Bedienfeld (3) bildenden Metall-Platte vorgesehen sind, deren Längsachsen parallel zu demjenigen Rand (29) des Feldes (30) zur Aufnahme der Grillplatte (2) ausgerichtet sind, der in Richtung des Bedienfeldes (3) weist, wobei sich die Langlöcher (31) mit einer Länge in dem Bereich von 5,0 % bis 95,0 % zentriert über die Breite (46) des Grills (1) durchgehend oder abschnittsweise - zumindest vor der oder vor den kapazitiven Eingabeeinrichtungen oder Bedieneinrichtungen (4) - erstrecken, wobei das mindestens eine Langloch (31) eine Breite aufweist, die in dem Bereich von 1,5 mm bis 25,0 mm liegt und wobei in dem mindestens einen ein- oder mehrteiligen Langloch (31) mindestens ein ein- oder mehrteiliger Wärme-Isolations-Einsatz (37) vorgesehen ist, welcher die Vorderseite (11) des Bedienfeldes (3) in dem Bereich von 0,1 mm bis 20,0 mm in Form eines Überstandes (39) nach oben überragt, während der Zapfen (38) des mindestens einen Wärme-Isolations-Einsatzes (37) mit der Unterseite (10) des Bedienfeldes (3) in Verbindung steht, wobei der mindestens eine Wärme-Isolations-Einsatz (37) undurchsichtig oder transparent und gegebenenfalls mittels einer oder mehrerer ein- oder mehrteiliger Beleuchtungen weißes oder farbiges Licht abgebend, ausgestaltet ist.

4. Plattenförmiger Grill (1) nach einem der vorhergehenden Ansprüche, **dadurch gekennzeichnet, dass** jede Bedieneinrichtung (4) ein flüssigkeitsdicht und in rotativer Hinsicht fest mit dem Bedienfeld (3) in Verbindung stehendes sockelförmiges Dichtungs- und Führungselement (8) umfasst, auf welchem ein um eine senkrecht zur Oberseite (11) des Bedienfeldes (3) ausgerichtete Drehachse (47) reversibel hin- und herdrehbarer Bedienknebel (27) der Bedieneinrichtung (4) reversibel abnehmbar vorgesehen ist, der mit einer parallel zu der Drehachse (47) ausgerichteten Achse (9) der Bedieneinrichtung (4) reversibel in Verbindung steht, wobei sowohl die Achse (9) der Bedieneinrichtung (4) als auch der Bedienknebel (27) der Bedieneinrichtung (4) von dem sockelförmigen, in rotativer Hinsicht feststehenden Dichtungs- und Führungselement (8) spielfrei gehalten und während der Drehung des Bedienknebels (27) der Bedieneinrichtung (4) spielfrei geführt sind.

5. Plattenförmiger Grill (1) nach einem der vorhergehenden Ansprüche, **dadurch gekennzeichnet, dass** das Bedienfeld (3) - in Abhängigkeit von der gewünschten Anzahl von Bedieneinrichtungen (4) - eine oder mehrere runde Aussparungen (6) aufweist, durch welche jeweils der Zapfen (7) eines Führungs- und Dichtungselementes (8) in Richtung der Unterseite (10) des Bedienfeldes (3) hindurchführbar ist, während das Führungs- und Dichtungselement (8) in Richtung der Oberseite (11) des Bedienfeldes (3) einen Vorsprung (12) ausbildet, der die Oberseite (11) des Bedienfeldes (3) nach oben überragt, wobei der Vorsprung (12) eine zentrale Aussparung (15) zur spielfreien Aufnahme und zur spielfreien Führung des zentralen Zapfens (16) des Bedienknebels (27) der Bedieneinrichtung (4) und/oder zur Hindurchführung der Achse (9) der Bedieneinrichtung (4) aufweist, wobei der Zapfen (7) des Führungs- und Dichtungselements (8) eine zentrale Aussparung (19) zur spielfreien Führung der Achse (9) der Bedieneinrichtung (4) besitzt, wobei der Übergang zwischen diesen beiden zentralen Aussparungen (15; 19) glatt oder stufig ist, wobei der Außenumfang des Zapfens (7) des Führungs- und Dichtungselementes (8) entweder ein Gewinde (24) zum Eingriff einer Mutter (25) oder eine oder mehrere Rasteinrichtungen (26) - zum formschlüssigen und/oder kraftschlüssigen Anbringen des Dichtungs- und Führungselementes (8) in dem Bereich um die Aussparung (6) des Bedienfeldes (3) - trägt, wobei das sockelartige Dichtungs- und Führungselement (8) - gegen ein Drehen um die Drehachse (47) gesichert - flüssigkeitsdicht mit dem Bedienfeld (3) in Verbindung steht, während der Bedienknebel (27) der Bedieneinrichtung (4) hutförmig oder scheibenförmig - um die Drehachse (47) drehbar - reversibel auf dem Dichtungs- und Führungselement (8) aufsitzt oder aufliegt oder mit diesem in Verbindung steht, wobei der drehbare Bedienknebel (27) der Bedieneinrichtung (4) und das feststehende, sockelförmige Führungs- und Dichtungselement (8) jeweils abhängig oder unabhängig voneinander - undurchsichtig oder transparent sind und gegebenenfalls mittels einer oder mehrerer ein- oder mehrteiliger Beleuchtungen weißes oder farbiges Licht abgebend ausgestaltet sind, wobei die Unterseite (21) des Vorsprunges (12) des sockelförmigen Dichtungs- und Führungselements (8) glatt ausgebildet ist oder eine ringförmig umlaufende Nut (49) für die Aufnahme eines O-Ringes (50) aufweist und wobei die seitlich umlaufende Außenwand des sockelförmigen, in rotativer Hinsicht feststehenden Führungs- und Dichtungselements (8) glatt und gerade oder - für den Eingriff der hutrandartig nach unten ausgerichteten umlaufenden Wand des drehbaren Bedienknebels (27) der Bedieneinrichtung (4) - stufenförmig ausgebildet ist.

6. Plattenförmiger Grill (1) nach einem der vorhergehenden Ansprüche, **dadurch gekennzeichnet, dass** der Vorsprung (12) des in rotativer Hinsicht feststehenden, sockelförmigen Führungs- und Dichtungselementes (8) die Oberseite (11) des Bedienfeldes (3) in einem Ausmaß (13) überragt, das in einem Bereich von 3,0 mm bis 40,0 mm liegt, wobei der Vorsprung (12) eine Breite (14) in dem Bereich von 20,0 mm bis 60,0 mm aufweist, wobei die Breite (17) der zentralen Aussparung (15) des Vorsprungs (12) des Führungs- und Dichtungselementes (8) in dem Bereich von 5,0 mm bis 40,0 mm liegt, wobei die Breite (18) der zentralen Aussparung (19) des Zapfens (7) des Dichtungs- und Führungselementes (8) an den Durchmesser der Achse (9) der Bedieneinrichtung (4) spielfrei angepasst ist und in dem Bereich von 5,0 mm bis 30,0 mm liegt, wobei der Abstand (20) zwischen der Unterseite (21) des Vorsprungs (12) des Dichtungs- und Führungselementes (8) einerseits und der Unterseite (22) des Zapfens (7) des Dichtungs- und Führungselements (8) andererseits in dem Bereich von 3,0 mm bis 30,0 mm liegt und wobei die Breite (23) des Zapfens (7) des Dichtungs- und Führungselementes (8) in dem Bereich von 7,0 mm bis 32,0 mm liegt.

7. Plattenförmiger Grill (1) nach einem der vorhergehenden Ansprüche, **dadurch gekennzeichnet, dass** das Randprofil (28) der vollflächig, gleichmäßig und gleichzeitig beheizten Grillplatte (2) - zwischen dem obenliegenden Rand (29) des Feldes (30) zur Aufnahme der Grillplatte (2) einerseits und der gegenüber dem obenliegenden Rand (29) abgesenkten Grillplatte (2) andererseits - in der Form eines schrägstehenden, gestreckten, glatten und knickfreien Buchstabens "S" ausgebildet ist, wobei der Radius (43) derjenigen Krümmung (42), die dem Rand (29) des Feldes (30) zur Aufnahme der Grillplatte (2) nahe gelegen ist und der Radius (41) der grillplattennahen Krümmung (40), jeweils in dem Bereich von 2,0 mm bis 20,0 mm liegen, wobei diese beiden Radien (43; 41) gleich oder voneinander verschieden sind und wobei zwischen der obenliegenden Krümmung (42) und der hierzu tieferliegenden Krümmung (40) ein gerade ausgebildetes Verbindungselement (44) vorgesehen ist, das mit einer durch die Mitte des geraden Verbindungselementes (44) gedachten vertikalen Linie einen Winkel α einschließt, der in dem Bereich von 88° bis 1° liegt.

8. Plattenförmiger Grill (1) nach einem der vorhergehenden Ansprüche, **dadurch gekennzeichnet, dass** es sich bei der - anstelle von oder zusätzlich zu der Bedieneinrichtung (4) - gegebenenfalls vorhandenen kapazitiven Einrichtung zur Steuerung und/oder Regelung des Flächenheizelementes (5) um einen benutzerbetätigten, kapazitiven Touchscreen des Typs "Projected Capacitive Touch" handelt, bei welchem - als Touch-Sensoren - zwei voneinander isolierte, leitfähige Ebenen übereinander liegen, die mit einem herstellerspezifischen Muster in Form von Kondensatoren bedruckt sind, wobei diese Touch-Sensoren auf der Unterseite (10) des Bedienfeldes (3) vorgesehen sind, wobei bei Annäherung oder Berührung der Touch-Oberfläche auf der Oberseite (11) des Bedienfeldes (3) mit einem Finger den Kondensatoren elektrische Ladung entzogen wird und dabei kapazitive Felder durch das Bedienfeld (3) hindurch projiziert werden, wobei eine Elektronik diese Änderung als Berührung erkennt.

## Claims

1. Plate-shaped grill (1), wherein the entire lower side of the grill plate (2) is in a full indirect or direct surface-to-surface contact with one or with a plurality of two-dimensional heating elements (5) in such a way that the grill plate (2) is heatable absolutely evenly and simultaneously with respect to its entire surface, **characterised in that** the two-dimensional heating element (5) for the full-surface, even and simultaneous heating of the grill plate (2) is a two-dimensional heating element (5) in which a resistance wire is closely embedded into a layer of mica fragments bonded with artificial resins, wherein this layer (35) is sandwiched between an upper aluminium plate (34) and a lower aluminium plate (36), and wherein this sandwich-like two-dimensional heating element (5) is indirectly or directly connected to the rear side of the grill plate (2) in such a way as to heat said grill plate (2) evenly and simultaneously over the entire surface thereof.

2. Plate-shaped grill (1) according to claim 1, **characterised in that** its surface (30) for receiving the grill plate (2) is formed in one piece with an operating panel (3), wherein both the surface (30) for receiving the grill plate (2) and the operating panel (3) are made of metal, and wherein the operating panel (3) carries either one or a plurality of capacitive input devices (32) for controlling the two-dimensional heating element (5) or, instead, one or a plurality of operating devices (4).

3. Plate-shaped grill (1) according to any one of the preceding claims, **characterised in that** between the surface (30) for receiving the grill plate (2) on the one hand and the operating panel (3) for receiving the one or the plurality of capacitive input devices (32) or operating devices on the other, one or a plurality of elongate holes (31), consisting of one or multiple parts each, are formed one behind the other, the elongate holes (31) being provided in the metal plate forming the surface (30) and the operating panel (3), wherein the longitudinal axes thereof are aligned parallel with the edge (29), facing in the direction of the operating panel (3), of the surface (30) for receiving the grill plate (2), wherein the elongate holes (31) extend entirely or partly, with a length in the range of 5.0% to 95.0%, across the width of the grill (1) in the centre thereof at least in front of the capacitive input device(s) or operating device(s) (4), wherein the at least one elongate hole (31) has a width in the range of 1.5 mm to 25.0 mm, and wherein in the at least one single-part or multi-part elongate hole (31), at least one single-part or multi-part heat insulation insert (37) is provided, which - in the form of a protrusion (39) - protrudes beyond the front side (11) of the operating panel (3) in the range of 0.1 mm to 20.0 mm in a vertically upward direction while the journal (38) of the at least one heat insulation insert (37) is connected to the lower side (10) of the operating panel (3), wherein the at least one heat insulation insert (37) is opaque or transparent and, if desired, is configured in such a way as to emit white or coloured light by means of one or a plurality of single-part or multi-part illumination devices.

4. Plate-shaped grill (1) according to any one of the preceding claims, **characterised in that** each operating device (4) comprises a socket-shaped sealing and guiding element (8) that is rigidly connected to the operating panel (3) in a liquid-tight and non-rotational manner on which an operating knob (27) of the operating device (4) is provided in such a way as to be reversibly removable, wherein the operating knob (27) is reversibly rotatable back and forth about an axis (47) of rotation oriented perpendicular to the upper side (11) of the operating panel (3) and reversibly connected to an axle (9) of the operating device (4), the axle (9) being oriented parallel to the axis (47) of rotation, wherein both the axle (9) of the operating device (4) and the operating knob (27) of the operating device (4) are held without play by the socket-shaped, non-rotational sealing and guiding element (4) and are guided without play during the rotation of the operating knob (27) of the operating device (4).

5. Plate-shaped grill (1) according to any one of the preceding claims, **characterised in that** depending on the desired number of operating devices (4), the operating panel (3) has one or a plurality of circular recesses (6) allowing the journal (7) of a respective guiding and sealing element (8) to be passed through in the direction of the lower side (10) of the operating panel (3) while the guiding and sealing element (8) forms a protrusion (12) in the direction of the upper side (11) of the operating panel (3), said protrusion (12) protruding beyond the upper side (11) of the operating panel (3), wherein the protrusion (12) has a central recess (15) for receiving and guiding the central journal (16) of the operating knob (27) of the operating device (4) without play and/or for passing through the axle (9) of the operating device (4), wherein the journal (7) of the guiding and sealing element (8) is provided with a central recess (19) for guiding the axle (9) of the operating device (4) without play, wherein the transition between these two central recesses (15; 19) is smooth or step-like, wherein the outer circumference of the journal (7) of the guiding and sealing element (8) carries either a thread (24) for engagement with a nut (25) or one or a plurality of snap-in locking means (26) for fitting the sealing and guiding element (8) in the region around the recess (6) of the operating panel (3) in a positive or non-positive manner, wherein the socket-shaped sealing and guiding element (8) - which is secured against a rotation about the axis (47) of rotation - is connected to the operating panel (3) in a liquid-tight manner while the hat-shaped or disk-shaped operating knob (27) of the operating device (4) reversibly rests upon or bears against or is connected to the sealing and guiding element (8) in such a way as to be rotatable about the axis (47) of rotation, wherein the rotatable operating knob (27) of the operating device (4) and the stationary socket-shaped guiding and sealing element (8) are opaque or transparent dependently or independently of each other and, if desired, are configured in such a way as to emit white or coloured light by means of one or a plurality of single-part or multi-part illumination devices, wherein the lower side (21) of the protrusion (12) of the socket-shaped sealing and guiding element (8) is smooth or provided with an annular circumferential groove (49) for receiving an O-ring (50), and wherein the lateral circumferential outer wall of the socket-shaped, non-rotational guiding and sealing element (8) is smooth and straight or step-like for engagement with the circumferential wall of the rotatable operating knob (27) of the operating device (4), the circumferential wall extending downwards in the manner of the brim of a hat.

6. Plate-shaped grill (1) according to any one of the preceding claims, **characterised in that** the protrusion (12) of the non-rotational socket-shaped guiding and sealing element (8) protrudes beyond the upper side (11) of the operating panel (3) to an extent (13) that ranges from 3.0 mm to 40.0 mm, wherein the protrusion (12) has a width (14) in the range of 20.0 mm to 60.0 mm, wherein the width (17) of the central recess (15) of the protrusion (12) of the guiding and sealing element (8) is in the range of 5.0 mm to 40.0 mm, wherein the width (18), ranging from 5.0 mm and 30.0 mm, of the central recess (19) of the journal (7) of the guiding and sealing element (8) is adjusted to the diameter of the axle (9) of the operating device (4) in such a way that there is no play, wherein the distance (20) between the lower side (21) of the protrusion (12) of the sealing and guiding element (8) on the one hand and the lower side (22) of the journal (7) of the sealing and guiding element (8) on the other is in the range of 3.0 mm to 30.0 mm, and wherein the width (23) of the journal (7) of the sealing and guiding element (8) is in the range of 7.0 mm to 32.0 mm.

7. Plate-shaped grill (1) according to any one of the preceding claims, **characterised in that** the edge profile (28) of the grill plate (2), which is heated evenly and simultaneously with respect to its entire surface, is configured in the shape of an oblique, stretched, smooth letter "S" without kinks between the upper edge (29) of the surface (30) for receiving the grill plate (2) on the one hand and the grill plate (2) lowered with respect to the upper edge (29) on the other, wherein the radius (34) of the curve (42) that is close to the edge (29) of the surface (30) for receiving the grill plate (2) and the radius (41) of the curve (40) that is close to the grill plate (2) are in the range of 2.0 mm to 20.0 mm each, wherein these two radii (43; 41) are equal to or different from each other, and wherein between the upper curve (42) and the curve (40) disposed at a lower position with respect thereto, there is a provided a straight connection element (44) that forms an angle α with an imaginary vertical line running through the centre of the straight connection element (44), said angle being in the range of 88° to 1°.

8. Plate-shaped grill (1) according to any one of the preceding claims, **characterised in that** the capacitive device for controlling the two-dimensional heating element (5), which may be provided instead of or in addition to the operating device (4), is an operator-actuated capacitive touch screen of the "projected capacitive touch" type in which two conductive planes, which are insulated from each other and serve as touch sensors, are placed on top of each other, said conductive planes being printed with a specific pattern, depending on the respective manufacturer, in the form of capacitors, wherein these touch sensors are provided on the lower side (10) of the operating panel (3), wherein some of the electrical charge of the capacitors is removed when a finger is moved in the vicinity of or touches the touch surface on the upper side (11) of the operating panel (3), thus causing capacitive fields to be projected through the operating panel (3), wherein an electronics system detects said change as a touch.

## Revendications

1. Grill en forme de plaque (1), l'ensemble de la face inférieure de la plaque de grill (2) étant en liaison indirecte ou directe, sur toute sa surface, avec un ou plusieurs éléments chauffants plats (5), de sorte que toute la surface de la plaque de grill (2) peut être chauffée de façon absolument uniforme et simultanée, **caractérisé en ce que** l'élément chauffant plat (5) servant au chauffage uniforme et simultané de toute la surface de la plaque de grill (2) est un élément chauffant plat (5) pour lequel un fil électrique résistif est inséré étroitement dans une couche (35) composée de fragments de mica pressés avec des résines synthétiques, cette couche (35) étant située en sandwich entre une plaque d'aluminium supérieure (34) et une plaque d'aluminium inférieure (36) et cet élément chauffant plat (5) en sandwich étant relié indirectement ou directement à la face arrière de la plaque de grill (2), et chauffant toute la surface de celle-ci de manière uniforme et simultanée.

2. Grill en forme de plaque (1) selon la revendication 1, **caractérisé en ce que** son champ (30) destiné à recevoir la plaque de grill (2) est réalisé d'une seule pièce avec un panneau de commande (3), le champ (30) destiné à recevoir la plaque de grill (2) et le panneau de commande (3) étant fabriqués en métal, et le panneau de commande (3) portant soit un ou plusieurs dispositifs d'entrée capacitifs (32) pour la commande et la régulation de l'élément chauffant plat (5), soit, en lieu et place de cela, un ou plusieurs dispositifs de commande (4).

3. Grill en forme de plaque (1) selon l'une quelconque des revendications précédentes, **caractérisé en ce qu'**entre le champ (30) destiné à recevoir la plaque de grill (2) d'une part et le panneau de commande (3) destiné à recevoir le ou les dispositifs d'entrée capacitifs (32) ou les dispositifs de commande (4) d'autre part, un ou plusieurs trous oblongs (31), dans chaque cas en une ou plusieurs parties, et ménagés les uns derrière les autres, sont prévus dans la plaque métallique formant le champ (30) et le panneau de commande (3), plaque dont les axes longitudinaux sont orientés parallèlement au bord (29) du champ (30), destiné à recevoir la plaque de grill (2), qui est orienté en direction du panneau de commande (3), les trous oblongs (31) s'étendant avec une longueur dans la plage de 5,0 % à 95,0 % de manière centrée sur toute la largeur (46) du grill (1), en continu ou sur certaines parties, au moins devant le ou les dispositifs d'entrée capacitifs ou les dispositifs de commande (4), le ou les trous oblongs (31) présentant une largeur qui se situe dans la plage de 1,5 mm à 25,0 mm et au moins un insert d'isolation thermique (37) en une ou plusieurs parties, lequel fait saillie vers le haut de la face avant (11) du panneau de commande (3) dans la plage de 0,1 mm à 20,0 mm sous la forme d'un dépassement (39), étant prévu dans le ou les trous oblongs (31) en une ou plusieurs parties, tandis que le tourillon (38) de l'insert ou des inserts d'isolation thermique (37) est relié à la face inférieure (10) du panneau de commande (3), l'insert ou les inserts d'isolation thermique (37) étant opaques ou transparents et, le cas échéant, émettant une lumière blanche ou colorée au moyen d'un ou de plusieurs éclairages en une ou plusieurs parties.

4. Grill en forme de plaque (1) selon l'une quelconque des revendications précédentes, **caractérisé en ce que** chaque dispositif de commande (4) comprend un élément d'étanchéité et de guidage (8) en forme de socle relié de manière étanche au fluide et fixe en terme de rotation au panneau de commande (3), élément sur lequel un bouton de commande (27) du dispositif de commande (4), pouvant être amené en rotation en va-et-vient de manière réversible autour d'un axe de rotation (47) orienté perpendiculairement à la face supérieure (11) du panneau de commande (3), peut être retiré de manière réversible, lequel bouton est relié de manière réversible à un axe (9) du dispositif de commande (4) orienté parallèlement à l'axe de rotation (47), l'axe (9) du dispositif de commande (4) et le bouton de commande (27) du dispositif de commande (4) étant retenus sans jeu par l'élément d'étanchéité et de guidage (8) en forme de socle, fixe en terme de rotation, et étant guidés sans jeu pendant la rotation du bouton de commande (27) du dispositif de commande (4).

5. Grill en forme de plaque (1) selon l'une quelconque des revendications précédentes, **caractérisé en ce que** le panneau de commande (3), en fonction du nombre souhaité de dispositifs de commande (4), comprend un ou plusieurs évidements ronds (6) à travers lesquels, dans chaque cas, le tourillon (7) d'un élément de guidage et d'étanchéité (8) peut être guidé en direction de la face inférieure (10) du panneau de commande (3), tandis que l'élément de guidage et d'étanchéité (8) forme une partie saillante (12) en direction de la face supérieure (11) du panneau de commande (3), qui fait saillie vers le haut de la face supérieure (11) du panneau de commande (3), la partie saillante (12) comprenant un évidement central (15) pour la réception sans jeu et pour le guidage sans jeu du tourillon central (16) du bouton de commande (27) du dispositif de commande (4) et/ou pour le guidage de l'axe (9) du dispositif de commande (4) à travers celui-ci, le tourillon (7) de l'élément de guidage et d'étanchéité (8) possédant un évidement central (19) pour le guidage sans jeu de l'axe (9) du dispositif de commande (4), le passage entre ces deux évidements centraux (15 ; 19) étant lisse ou étagé, la périphérie extérieure du tourillon (7) de l'élément de guidage et d'étanchéité (8) portant soit un filet (24) pour la mise en prise avec un écrou (25) soit un ou plusieurs dispositifs d'encliquetage (26), pour le montage par coopération de formes et/ou à force de l'élément de guidage et d'étanchéité (8) dans la zone située autour de l'évidement (6) du panneau de commande (3), l'élément de guidage et d'étanchéité (8) du type socle étant relié de manière étanche au fluide au panneau de commande (3), en étant empêché de tourner autour de l'axe de rotation (47), tandis que le bouton de commande (27) du dispositif de commande (4) repose ou se situe de manière réversible sur l'élément de guidage et d'étanchéité (8) ou est relié à celui-ci en formant un chapeau ou un disque, de manière à pouvoir tourner autour de l'axe de rotation (47), le bouton de commande (27) rotatif du dispositif de commande (4) et l'élément de guidage et d'étanchéité (8) fixe, en forme de socle, respectivement indépendamment l'un de l'autre, étant opaques ou transparents et, le cas échéant, émettant une lumière blanche ou colorée au moyen d'un ou de plusieurs éclairages en une ou plusieurs parties, la face inférieure (21) de la partie saillante (12) de l'élément de guidage et d'étanchéité (8) en forme de socle étant lisse ou présentant une rainure (49) annulairement périphérique pour la réception d'un joint torique (50) et la paroi extérieure latéralement périphérique de l'élément de guidage et d'étanchéité (8) en forme de socle, fixe en terme de rotation, étant lisse et rectiligne ou, pour la mise en prise avec la paroi périphérique, orientée vers le bas à la façon d'un chapeau, du bouton de commande (27) rotatif du dispositif de commande (4), étagé.

6. Grill en forme de plaque (1) selon l'une quelconque des revendications précédentes, **caractérisé en ce que** la partie saillante (12) de l'élément de guidage et d'étanchéité (8) en forme de socle, fixe en terme de rotation, fait saillie de la face supérieure (11) du panneau de commande (3) d'une ampleur (13) qui se situe dans une plage allant de 3,0 mm à 40,0 mm, la partie saillante (12) présentant une largeur (14) dans la plage de 20,0 mm à 60,0 mm, la largeur (17) de l'évidement central (15) de la partie saillante (12) de l'élément de guidage et d'étanchéité (8) se situant dans la plage de 5,0 mm à 40,0 mm, la largeur (18) de l'évidement central (19) du tourillon (7) de l'élément de guidage et d'étanchéité (8) étant adaptée sans jeu au diamètre de l'axe (9) du dispositif de commande (4) et se situant dans la plage de 5,0 mm à 30,0 mm, l'écart (20) entre la face inférieure (21) de la partie saillante (12) de l'élément de guidage et d'étanchéité (8) d'une part et la face inférieure (22) du tourillon (7) de l'élément de guidage et d'étanchéité (8) d'autre part se situant dans la plage de 3,0 mm à 30,0 mm et la largeur (23) du tourillon (7) de l'élément de guidage et d'étanchéité (8) se situant dans la plage de 7,0 mm à 32,0 mm.

7. Grill en forme de plaque (1) selon l'une quelconque des revendications précédentes, **caractérisé en ce que** le profil marginal (28) de la plaque de grill (2) chauffée sur toute sa surface de manière uniforme et simultanée, entre le bord supérieur (29) du champ (30) destiné à recevoir la plaque de grill (2) d'une part et la plaque de grill (2) abaissée par rapport au bord supérieur (29) d'autre part, est réalisé sous la forme d'une lettre « S » inclinée, étirée, lisse et sans rupture de courbe, le rayon (43) de la courbure (42) qui est proche du bord (29) du champ (30) destiné à recevoir la plaque de grill (2) et le rayon (41) de la courbure (40) proche de la plaque de grill se situant chacun dans la plage de 2,0 mm à 20,0 mm, ces deux rayons (43 ; 41) étant identiques ou différents l'un de l'autre, et un élément de liaison (44) droit, qui forme avec une ligne verticale imaginaire passant par le centre de l'élément de liaison (44) droit un angle α qui se situe dans la plage de 88° à 1°, étant prévu entre la courbure supérieure (42) et la courbure (40) plus basse que celle-ci.

8. Grill en forme de plaque (1) selon l'une quelconque des revendications précédentes, **caractérisé en ce que** le dispositif capacitif de commande et/ou de régulation de l'élément chauffant plat (5), présent le cas échéant, en lieu et place ou en plus du dispositif de commande (4), est un écran tactile capacitif pouvant être actionné par l'utilisateur, du type « tactile capacitif projeté », deux plans conducteurs isolés l'un de l'autre, en tant que capteurs tactiles, étant superposés, sur lesquels sont imprimés des motifs spécifiques au fabricant prenant la forme de condensateurs, ces capteurs tactiles étant prévus sur la face inférieure (10) du panneau de commande (3), dans lequel, lorsqu'un doigt se rapproche de la surface tactile sur la face supérieure (11) du panneau de commande (3) ou la touche, une charge électrique est retirée des condensateurs, et des champs capacitifs sont projetés à travers le panneau de commande (3), une électronique identifiant cette modification comme un contact.
